# EUROPÄISCHE PATENTSCHRIFT

(11) **EP 1 011 190 B1**
(45) Veröffentlichungstag und Bekanntmachung des Hinweises auf die Patenterteilung: **22.10.2003**
(21) Anmeldenummer: 99123946.8
(22) Anmeldetag: 03.12.1999
(51) Int. Cl.: H02P 7/29, H02P 7/00

(54) **Verfahren und Schaltungsanordnung zur Überwachung des Betriebszustandes einer Last**
Method and circuit for monitoring the operational status of a charge
Méthode et circuit pour surveiller une charge en régime de fontionnement

(30) Priorität: 18.12.1998 DE 19858697
(43) Veröffentlichungstag der Anmeldung: 21.06.2000
(73) Patentinhaber: Siemens Aktiengesellschaft, 80333 München (DE)
(72) Erfinder: Joch, Christoph, 65824 Schwalbach (DE); Hadamik, Matthias, 61348 Bad Homburg (DE)

(56) Entgegenhaltungen:
- EP-A- 0 166 501
- US-A- 4 471 283
- US-A- 5 757 214
- BACKMAN N ET AL: "SIMPLIFIED SINGLE STAGE PFC INCLUDING PEAK CURRENT MODE CONTROL IN A FLYBACK CONVERTER" INTELEC 2000. 22ND. INTERNATIONAL TELECOMMUNICATIONS ENERGY CONFERENCE. PHOENIX, AZ, SEPT. 10 - 14, 2000, INTELEC. INTERNATIONAL TELECOMMUNICATIONS ENERGY CONFERENCE, NEW YORK, NY: IEEE, US, Bd. CONF. 22, 10. September 2000 (2000-09-10), Seiten 317-324, XP000968723 ISBN: 0-7803-6408-2
- PATENT ABSTRACTS OF JAPAN vol. 1998, no. 12, 31. Oktober 1998 (1998-10-31) & JP 10 194137 A (HONDA MOTOR CO LTD), 28. Juli 1998 (1998-07-28)

## Beschreibung

Die Erfindung betrifft ein Verfahren zur Überwachung des Betriebszustandes einer Last gemäß dem Oberbegriff des Patentanspruchs 1 sowie eine Schaltungsanordnung zur Durchführung des Verfahrens.

Beim dynamischen Betreiben von Lasten, wie beispielsweise einem Elektromotor in einem Regelkreis, erfolgt die Ansteuerung der Last mit pulsweitenmodulierten Signalen. Bei diesem dynamischem Betrieb ist es notwendig, den Elektromotor zu beschleunigen, abzubremsen oder auch die Drehrichtung zu wechseln.

Bei einem abrupten Richtungswechsel am Elektromotor entsteht ein Reversierstrom, der für kurze Zeit ein Vielfaches des Betriebsstromes des Elektromotors betragen kann. Um für diesen Fall eine Überlastung der Stromquelle und der Elektronik zu verhindern, ist es üblich, elektronische Strombegrenzungen vorzusehen (US-5,757,214).

Um die Elektronik vor einem Kurzschluss zu schützen, ist eine elektrische Kurzschlusssicherung vorgesehen, deren Schwelle über dem hohen Reversierstrom liegen muss.

Es kommt jedoch vor, dass aufgrund der realen Innenwiderstände der Elektronik bei niedrigen Betriebsspannungen bei einem nicht idealen Kurzschluss (R_{I} > 30 mΩ) oder einem blockierten Motor ein Stromfluss, der zum Ansprechen der Kurzschlusssicherung führt, nicht erreicht wird. In diesen Fall spricht die Strombegrenzung aufgrund des endlichen Stromanstieges nur verzögert an. Da die Strombegrenzung bei jeder PWM-Periode wieder zurückgesetzt wird, fließt die ganze Zeit ein hoher, gepulster Strom durch die Endstufe, was zur Folge hat, dass die Elektronik zerstört wird oder die Gefahr eines Kabelbrandes entsteht.

Der Erfindung liegt somit die Aufgabe zugrunde, ein Verfahren und eine Schaltungsanordnung anzugeben, welche eine Erkennung des Betriebszustandes der Last sowie eine situationsgerechte Ansteuerung der Last in Abhängigkeit von dem Betriebszustand ermöglicht.

Erfindungsgemäß wird die Aufgabe durch die Merkmale des Patentanspruchs 1 gelöst.

Der Vorteil der Erfindung besteht darin, dass keine zusätzlichen Überwachungseinrichtungen notwendig sind, sondern ein zu einem anderen Zweck erzeugtes Signal ausgewertet wird.

Durch die Auswertung des Signals besteht die Möglichkeit auf den Fehler zu reagieren. Durch eine Veränderung des ursprünglichen PWM-Signals kann die Dynamik der Motorregelung und somit die Belastung der Endstufen reduziert werden. Gleichzeitig werden durch eine solche dynamische Regelung Änderungen der Betriebsspannung und der Temperatur korrigiert.

Zur Erkennung des Ansprechens der Strombegrenzung wird die Pulsdauer des variierten Ansteuersignals ausgewertet. Durch einen Soll-Istwert-Vergleich der Pulsdauer wird die Wirksamkeit der Strombegrenzung festgestellt.

Vorteilhafterweise wird zur Begrenzung des Stromflusses durch die Last ein durch die Last fließender Strom gemessen und während des Anliegens eines Steuerpulses des Ansteuersignals an der Last der Messstrom mit einem Grenzwert verglichen, wobei die Pulsdauer des Steuersignals in Abhängigkeit von diesem Vergleich variiert wird.

Der Vorteil besteht darin, dass mit Hilfe des durch die Last fließenden Stromes sicher der Betriebszustand der induktiven Last bestimmt werden kann und dass in Abhängigkeit des Stromes die Pulsdauer und damit der an der Endstufe anliegende Strom so eingestellt werden kann, dass kritische Situationen sicher verhindert werden.

Vorteilhafterweise wird eine Strombegrenzung erreicht, wenn die Pulsdauer bei Erreichen des Grenzwertes variiert wird.

Seine weiter Ausgestaltung der Erfindung betrifft eine Schaltungsanordnung zum getakteten Ansteuern einer Last, insbesondere eines Elektromotors in einem Kraftfahrzeug, bei welcher zur Durchführung des Verfahrens die Last über eine Endstufe mit einem von einer Steuereinrichtung erzeugten pulsweitenmodulierten Signal ansteuerbar ist, und der durch die Last fließende Strom durch eine Strommesseinrichtung ermittelt wird, welche mit einer Schwellwerteinrichtung verbunden ist, die bei Erreichen des Schwellwertes eine Schalteinrichtung ansteuert, welche während des Anliegens eines Steuerimpulses an der Endstufe den Steuerpuls beendet. Diese Schaltungsanordnung ist dadurch gekennzeichnet, dass der Steuerpuls der Schwellwerteinrichtung zur Bestimmung des Betriebszustandes der Last einer Auswertschaltung zuführbar ist, die die Häufigkeit des Ansprechens der Strombegrenzung innerhalb eines vorgegebenen Zeitraumes zählt, wobei aus der Häufigkeit der Strombegrenzung ein Rückschluss auf den Betriebszustand der Last gezogen wird.

Durch das Beenden des Steuerpulses an der Endstufe wird der Stromfluss durch die induktive Last begrenzt. Die Auswerteeinrichtung beobachtet das Ansprechen der Strombegrenzungsschaltung über mehrere PWM-Perioden innerhalb einer vorgegebenen Zeitdauer. Da in vorhergehenden Messungen das Verhalten der Last unter verschiedenen Betriebsbedingungen bestimmt wurde, ist für jeden dieser Betriebszustände die Häufigkeit des Ansprechens der Strombegrenzungsschaltung bekannt. Der Vergleich der tatsächlich erfassten Häufigkeit mit der. dem Normalzustand entsprechenden Häufigkeit erlaubt Aussagen über den Betriebszustand der Last.

Die Auswertung des Ansteuersignal muss nicht immer hardwaremäßig erfolgen, sondern ist auch mit einer geeigneten Software einfach möglich.

Zur Auswertung des Ausgangssignals der Schwellwerteinrichtung wird dieses einem Integrationsglied oder der Steuereinrichtung zugeführt, welche das ursprüngliche pulsweitenmodulierte Ansteuersignal erzeugt. Mit Hilfe der über mehrere Perioden des pulsweitenmodulierten Signales detektierten Ansprechhäufigkeit wird die Belastungssituation des Motors beurteilt und notwendige Gegenmaßnahmen eingeleitet.

Vorteilhafterweise enthält die Schalteinrichtung einen Flip-Flop, dessen Setzeingang an die Schwellwerteinrichtung führt, während an seinem Reset-Eingang das von der Steuereinrichtung erzeugte pulsweitenmodulierte Signal anliegt. Mit Hilfe einer solch einfachen Schaltungsanordnung wird durch Auswertung des Ausgangssignales des Flip-Flops nicht nur eine digitale Strombegrenzung geschaffen, sondern gleichzeitig ein dynamischer Regelkreis zur Ansteuerung der induktiven Last eingestellt.

Dabei ist die zu schaltende Last Bestandteil einer Brückenschaltung, wobei jede Halbbrücke dieser Brückenschaltung von dem variierten pulsweitenmodulierten Signal angesteuert wird.

Die Last kann aber auch je nach Anwendungsfall Bestandteil einer Halbbrücke sein oder nur über einen Schalter vom Steuergerät angesteuert werden.

Die Erfindung läßt zahlreiche Ausführungsformen zu. Eine davon soll anhand der in der Zeichnungen dargestellten Figuren näher beschrieben werden.

Es zeigt:
- Figur 1:: erste Ausführungsform der erfindungsgemäßen Ansteuerschaltung,
- Figur 2:: Impulsdiagramm,
- Figur 3:: zweite Ausführungsform der erfindungsgemäßen Ansteuerschaltung.
Gleiche Merkmale sind mit gleichen Bezugszeichen gekennzeichnet.

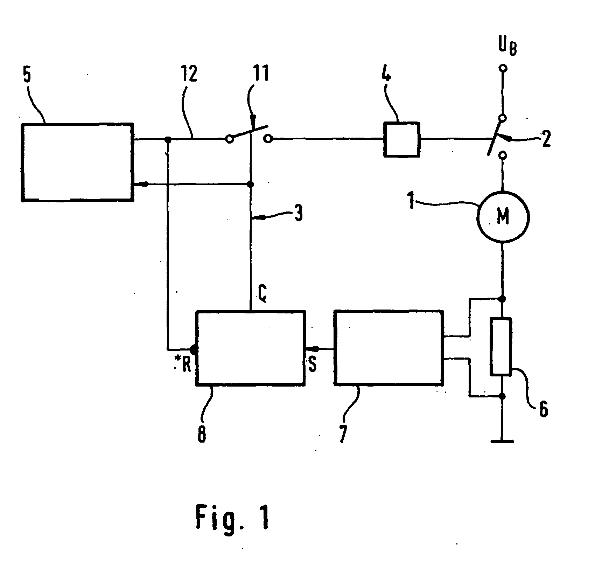

In Figur 1 ist ein Elektromotor 1 zwischen die Batteriespannung U_{B} und Masse geschaltet. Ein Schalter 2 wird in Abhängigkeit eines von einer Steuereinrichtung 5 erzeugten pulsweitenmodulierten Signales von einem Treiber 4 getaktet angesteuert, wodurch der Elektromotor 1 in vorgegebener Frequenz mit der Batteriespannung U_{B} verbunden wird. Zwischen dem Elektromotor 1 und Masse ist ein Shunt 6 geschaltet. Die Spannung über dem Shunt 6 wird durch einen Schwellwertschalter 7 abgegriffen, dessen Ausgang den Setzeingang eines Flip-Flops 8 ansteuert. Der Reset-Eingang des Flip-Flops 8 führt an die Steuereinrichtung 5. Die von der Steuereinrichtung 5 erzeugte pulsweitenmodulierte Ansteuerspannung liegt am Reset-Eingang des Flip-Flops 8 an. Der Ausgang des Flip-Flops 8 betätigt einen Schalter 11, und ist mit der Verbindungsleitung 12 zwischen Steuereinrichtung 5 und Schalter 2 verbunden. Darüber hinaus stellt der Schalter 11 ebenfalls eine Verbindung 3 zwischen dem Flip-Flop 8 und der Steuereinrichtung 5 her.

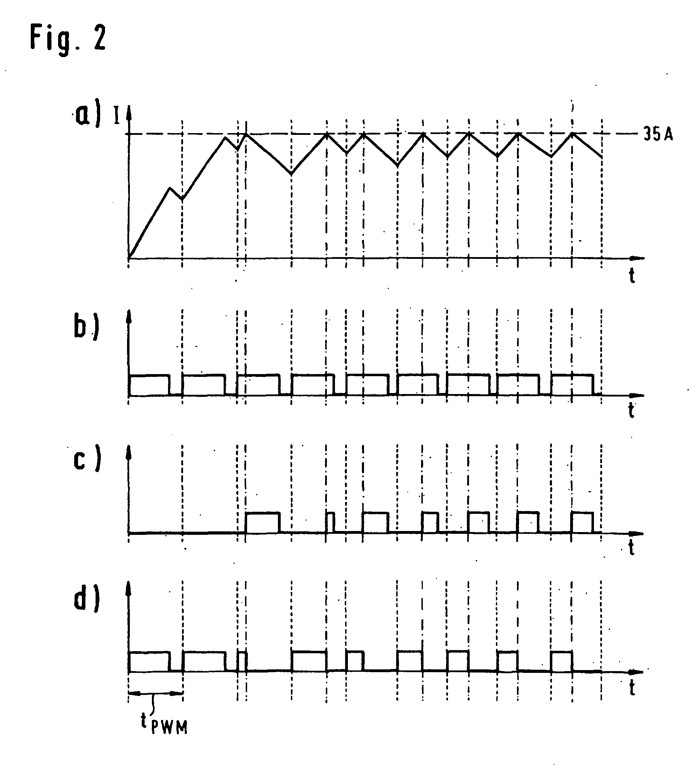

Die Funktionsweise dieser Schaltungsanordnung soll anhand der Impulsdiagramme in Figur 2 erläutert werden. Im Diagramm a ist der durch den Motor 1 fließende Strom 1 über der Zeit t dargestellt, wie er durch den Shunt 6 gemessen wird. Die Zeitachse ist dabei in Zeitabschnitte t_{PWM} unterteilt, welche der Periodendauer des von der Steuereinrichtung 5 erzeugten pulsweitenmodulierten Signales entsprechen.

In Figur 2b ist das von der Steuereinrichtung 5 an den Schalter 2 ausgegebene PWM-Signal dargestellt. Dabei ist ersichtlich, daß dieses Signal ein konstantes Puls-Pausen-Verhältnis aufweist. Ein solches Signal steuert beim Einschalten der Elektronik den Motor 1 an. Bei Anliegen eines Pulses schließt sich der Schalter 2, wodurch der Motor 1 mit der Betriebsspannung U_{B} verbunden wird und durch den Shunt 6 ein Strom fließt. In der Pulspause fällt der Strom ab und steigt erst wieder bei Beginn des Anliegens eines neuen Pulses durch das vom Steuergerät 5 erzeugte pulsweitenmodulierte Signal an.

Der diesen Stromfluß durch den Shunt 6 entsprechende Spannungsabfall wird durch den Vergleicher 7 gemessen und verstärkt. Im Vergleicher 7 wird festgestellt, ob der durch den Motor fließenden Strom eine Schwelle von 35 Ampere erreicht hat (vgl. Figur 2a). Ist dies der Fall, wird der Setzeingang des Flip-Flops 8 gesetzt. Zum gleichen Zeitpunkt liegt am Reset-Eingang des Flip-Flops 8 eine Information darüber an, ob am Schalter 2 ein Puls oder eine Pause des pulsweitenmodulierten Signales anliegt. Liegt ein Puls an, schaltet das Flip-Flop 8 den Schalter 11, wodurch ein in Figur 2c dargestellter Puls t_{SB} erzeugt wird, welcher die Dauer des ursprünglichen Ansteuersignales zeitlich begrenzt. Das daraus resultierende pulsweitenmodulierten Ansteuersignal ist in Figur 2d dargestellt, woraus ersichtlich ist, daß der durch den Flip-Flop 8 gesetzte Puls t_{SB} innerhalb einer Periode das ursprüngliche pulsweitenmodulierte Signal verkürzt, wodurch der Stromanstieg durch den Motor 1 begrenzt wird.

Der eben beschriebene Meß- und Regelvorgang wiederholt sich in jeder Periode des Ansteuersignals. Wie aus der Figur 2 ersichtlich, wird aufgrund der konkreten Betriebsbedingungen ein pulsweitenmoduliertes Signal erzeugt, bei welchem innerhalb der einzelnen Perioden unterschiedliche Pulsdauern auftreten. Wie oft dabei die Strombegrenzung anspricht, hängt von den Betriebsbedingungen des Motors 1 ab.

Das so variierte pulsweitenmodulierte Signal wird dem Steuergerät 5 zur Auswertung zugeführt. In einer nicht weiter dargestellten Speichereinrichtung des Steuergerätes 5 ist in Form einer Tabelle abgespeichert, zu wieviel Prozent die Strombegrenzungseinrichtung bei verschiedenen Belastungszuständen des Motors 1 anspricht. Dieses prozentuale Verhalten wird aus der Häufigkeit der Strombegrenzung bestimmt, durch die der vom Steuergerät 5 erzeugte Steuerpuls reduziert wird.

So wird beispielsweise angenommen, daß die Strombegrenzungseinrichtung im Normalfall in einer festgesetzten Meßzeit von 0,5 s bis zu 50 % anspricht.

D.h. in 50 % der PWM-Perioden wird bei einer Meßzeit von 0,5 s der Strom begrenzt. Weist das Ansteuersignal eine Frequenz f_{PWM} von beispielsweise 10 kHz auf, so werden in 0,5 s 5000 Perioden erzeugt. Bei einer Ansprechhäufigkeit von 50 % spricht die Strombegrenzung bei 2500 Perioden an.

Ergibt die Auswertung des variierten pulsweitenmodulierten Signales ein Ansprechen der Strombegrenzungsschaltung > 50 %, wird auf eine schwergängige Mechanik geschlossen. Darauf muß die Auswerteeinrichtung entsprechend reagieren. Um die Endstufe zu schützen, wird beispielsweise die Regelverstärkung verringert.

Eine Blockierung des Motors 1 wird erkannt, wenn die Strombegrenzung zu 100 % anspricht. In diesem Fall wird die Ansteuerung des Motors durch das Steuergerät eingestellt. Mittels einer Signaleinrichtung wird der Bediener auf den Fehler aufmerksam gemacht, und das Steuergerät 5 kann weitere Maßnahmen einleiten.

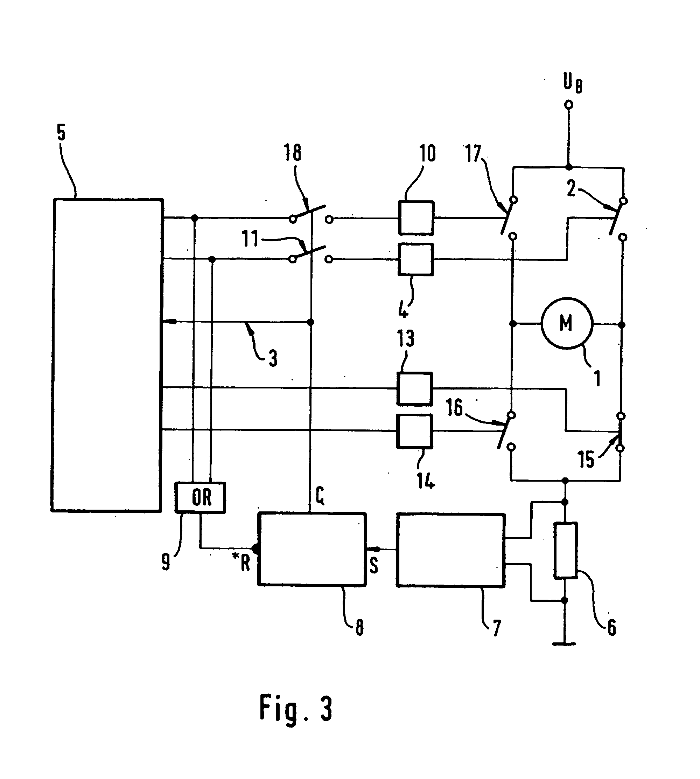

In Figur 3 ist eine Schaltungsanordnung zum variablen Ansteuern eines Verstellmotors, der beispielsweise den Hub von Ventilen in Kraftfahrzeugen verstellt, dargestellt. Wie aus Figur 3 ersichtlich, ist der Motor 1 Bestandteil einer aus den Schaltern 2, 17 bzw. 16, 15 bestehenden Brükkenschaltung. Jede Halbbrücke 16, 17 bzw. 2, 15 ist zwischen der Betriebsspannung U_{B} und Masse geschaltet. Auch hier ist zwischen der Brücke und Masse ein Strommeßwiderstand 6 angeordnet. Jeder Schalter wird dabei von einem Treiber angesteuert. Dabei schaltet der Treiber 4 den Schalter 2. Der Treiber 10 taktet den Schalter 17, während der Treiber 14 den Schalter 16 steuert. Der Schalter 15 wird vom Treiber 13 gesteuert. Mit Hilfe einer Oder-Schaltung 9 wird festgestellt, an welchem Ausgang des Steuergerätes 5 das pulsweitenmodulierte Signal anliegt, wobei die Oder-Schaltung mit dem Reset-Eingang R des Flip-Flops 8 verbunden ist.

Um die Erläuterung zu vereinfachen, wird nur eine Halbbrücke betrachtet, wobei der Schalter 2 auf low liegt, während an dem zweiten Schalter 17 das PWM-Signal anliegt. Der Schalter 16 ist offen und der Schalter 15 ist ständig geschlossen.

Der Motor 1 wird regelmäßig mit hohen Strömen (etwa zwischen 10 und 100 Ampere) von der Steuereinrichtung 5 ein- und ausgeschaltet. In der Ausgangssituation wird der Motor 1 bestromt, in vorliegendem Beispiel wird durch das PWM-Signal der Schalter 17 getaktet, während der Schalter 15 dauerhaft geschlossen ist. Wie schon im Zusammenhang mit Figur 1 erläutert, wird der durch den Motor 1 fließende Strom mittels dem Shunt 6 gemessen und in der Schwellwertschaltung 7 ausgewertet. Bei Überschreitung eines Grenzwertes von 35 Ampere und bei gleichzeitigem Anliegen eines Pulses am Treiber 10 schaltet das Flip-Flop 8 den Schalter 18, wodurch die pulsweitenmodulierte Ansteuerspannung gemäß Figur 2 variiert wird.

Das variierte pulsweitenmodulierte Signale wird über die Leitung 3 dem Steuergerät 5 zur Auswertung zugeführt. Die Auswertung der variierten Pulsdauer des Ansteuersignale wird, wie bereits beschrieben, einfach in der als Mikrocontroller ausgebildeten Steuereinrichtung 5 durchgeführt.

## Patentansprüche

1. Verfahren zur Überwachung des Betriebszustandes einer Last, welche durch ein Steuersignal getaktet angesteuert wird, insbesondere für einen Elektromotor in einem Kraftfahrzeug, wobei die getaktete Ansteuerung durch ein pulsweitenmoduliertes Ansteuersignal erfolgt,
**dadurch gekennzeichnet, dass** das zur Begrenzung des Stromflusses durch die Last ein seiner Pulsweite variierte Ansteuersignal zur Bestimmung des Betriebszustandes der Last derart ausgewertet wird, dass die Häufigkeit des Ansprechens der Strombegrenzung innerhalb eines vorgegebenen Zeitraumes gezählt wird, und aus der Häufigkeit der Strombegrenzung ein Rückschluss auf den Betriebszustand der Last gezogen wird.

2. Verfahren nach Anspruch 1, **dadurch gekennzeichnet, dass** zur Erkennung des Ansprechens der Strombegrenzung die Pulsdauer des variierten Ansteuersignals ausgewertet wird.

3. Verfahren nach Anspruch 1 oder 2, **dadurch gekennzeichnet, dass** zur Begrenzung des Stromflusses durch die Last ein durch die Last fließender Strom gemessen wird und während des Anliegens eines Steuerpulses an der Last der Messstrom mit einem Grenzwert verglichen wird, wobei die Pulsdauer des Steuersignals in Abhängigkeit von diesem Vergleich variiert wird.

4. Verfahren nach Anspruch 3, **dadurch gekennzeichnet, dass** die Pulsweite bei Erreichen des Grenzwertes variiert wird.

5. Schaltungsanordnung zum getakteten Ansteuern einer Last, insbesondere eines Elektromotors in einem Kraftfahrzeug, bei welcher zur Durchführung des Verfahrens nach Anspruch 1 die Last über eine Endstufe mit einem von einer Steuereinrichtung erzeugten pulsweitenmodulierten Signal ansteuerbar ist, und der durch die Last fließende Strom durch eine Strommesseinrichtung ermittelt wird, welche mit einer Schwellwerteinrichtung verbunden ist, die bei Erreichen des Schwellwertes eine Schalteinrichtung ansteuert, welche während des Anliegens eines Steuerimpulses an der Endstufe den Steuerpuls beendet, **dadurch gekennzeichnet, dass** der Steuerpuls der Schwellwerteinrichtung (7) zur Bestimmung des Betriebszustandes der Last (1) einer Auswertschaltung zuführbar ist, die die Häufigkeit des Ansprechens der Strombegrenzung innerhalb eines vorgegebenen Zeitraumes zählt, wobei aus der Häufigkeit der Strombegrenzung ein Rückschluss auf den Betriebszustand der Last gezogen wird.

6. Schaltungsanordnung nach Anspruch 5, **dadurch gekennzeichnet, dass** das Ausgangssignal der Schwellwerteinrichtung (7) zur Auswertung einem Integrationsglied zugeführt ist.

7. Schaltungsanordnung nach Anspruch 5, **dadurch gekennzeichnet, dass** das Ausgangssignal zur Auswertung der, das pulsweitenmodulierte Ansteuersignal erzeugenden Steuereinrichtung (5) zugeführt ist.

8. Schaltungsanordnung nach einem der Ansprüche 6 bis 7, **dadurch gekennzeichnet, dass** die Schalteinrichtung (8) ein Flip-Flop ist, dessen Setzeingang (S) an die Schwellwerteinrichtung (7) führt und an dessen Reset-Eingang (R) das von der Steuereinrichtung (5) erzeugte pulsweitenmodulierte Ansteuersignal anliegt.

9. Schaltungsanordnung nach einem der vorhergehenden Ansprüche 6 bis 8, **dadurch gekennzeichnet, dass** die zu schaltende Last (1) Bestandteil einer Brückenschaltung ist, wobei jede Halbbrücke dieser Brückenschaltung mit dem variierten pulsweitenmodulierten Signal ansteuerbar ist.

## Claims

1. Method for monitoring the operating state of a load which is actuated in a clocked fashion by means of a control signal, in particular for an electric motor in a motor vehicle, the clocked actuation being carried out by means of a pulse-width-modulated actuation signal, **characterized in that** the actuation signal which is varied in its pulse width in order to limit the flow of current through the load is evaluated in order to determine the operating state of the load in such a way that the frequency of response of the current limitation is counted within a predefined time period, and a conclusion about the operating state of the load is drawn from the frequency of the current limitation.

2. Method according to Claim 1, **characterized in that** the pulse length of the varied actuation signal is evaluated in order to detect the response of the current limitation.

3. Method according to Claim 1 or 2, **characterized in that**, in order to limit the flow of current through the load, a current which flows through the load is measured, and the measurement current is compared with a limiting value during the application of a control pulse to the load, the pulse length of the control signal being varied as a function of this comparison.

4. Method according to Claim 3, **characterized in that** the pulse width is varied when the limiting value is reached.

5. Circuit arrangement for the clocked actuation of a load, in particular of an electric motor, in a motor vehicle, in which, in order to carry out the method according to Claim 1, the load can be actuated by means of an output stage with a pulse-width-modulated signal which is generated by a control device, and the current flowing through the load is determined by means of a current measuring device which is connected to a threshold value device which, when the threshold value is reached, actuates a switching device which, during the application of a control pulse to the output stage, switches off the control pulse, **characterized in that**, in order to determine the operating state of the load (1), the control pulse of the threshold value device (7) can be fed to an evaluation circuit which counts the frequency of response of the current limitation within a predefined time period, a conclusion being drawn about the operating state of the load from the frequency of the current limitation.

6. Circuit arrangement according to Claim 5, **characterized in that** the output signal of the threshold value device (7) is fed to an integration element for evaluation.

7. Circuit arrangement according to Claim 5, **characterized in that** the output signal is fed for evaluation to the control device (5) which generates the pulse-width-modulated actuation signal.

8. Circuit arrangement according to one of Claims 6 to 7, **characterized in that** the switching device (8) is a flip-flop whose setting input (S) leads to the threshold value device (7), and at whose reset input (R) the pulse-width-modulated actuation signal which is generated by the control device (5) is present.

9. Circuit arrangement according to one of the preceding Claims 6 to 8, **characterized in that** the load (1) which is to be switched is a component of a bridge circuit, each half bridge of this bridge circuit being capable of being actuated using the varied pulse-width-modulated signal.

## Revendications

1. Procédé de surveillance du régime de fonctionnement d'une charge qui est commandée de manière cadencée par un signal de commande, en particulier celle d'un moteur électrique dans un véhicule automobile, la commande cadencée s'effectuant par l'intermédiaire d'un signal de commande à impulsions modulées en largeur, **caractérisé en ce que** pour limiter le courant qui traverse la charge, le signal de commande à impulsions de largeur variable est évalué pour déterminer le régime de fonctionnement de la charge, **en ce que** la fréquence des réactions d'une limitation du courant est comptée pendant un laps de temps prédéterminé, et une conclusion sur le régime de fonctionnement de la charge étant tirée de la fréquence des limitations du courant.

2. Procédé selon la revendication 1, **caractérisé en ce que** pour détecter l'activation de la limitation du courant, on évalue la durée des impulsions du signal de commande variable.

3. Procédé selon la revendication 1 ou 2, **caractérisé en ce que** pour limiter le courant qui traverse la charge, on mesure un courant qui traverse la charge et, pendant l'application d'une impulsion de commande à la charge, on compare le courant mesuré à une valeur limite, la durée des impulsions du signal de commande étant modifiée en fonction de cette comparaison.

4. Procédé selon la revendication 3, **caractérisé en ce que** la largeur des impulsions est modifiée lorsque la valeur de seuil est atteinte.

5. Agencement de circuit pour la commande cadencée d'une charge, en particulier d'un moteur électrique dans un véhicule automobile, dans lequel, pour mettre en oeuvre le procédé selon la revendication 1, la charge peut être commandée par un étage final à l'aide d'un signal à impulsions modulées en largeur créée dans un dispositif de commande, et le courant qui traverse la charge étant déterminé par un dispositif de mesure du courant qui est relié à un dispositif à valeur de seuil qui, lorsque la valeur de seuil est atteinte, active un dispositif de commutation qui interrompt l'impulsion de commande pendant l'application d'une impulsion de commande sur l'étage final, **caractérisé en ce que**, pour déterminer le régime de fonctionnement de la charge (1), l'impulsion de commande du dispositif (7) à valeur de seuil peut être amenée à un circuit d'évaluation qui compte la fréquence des activations de la limitation du courant pendant un laps de temps prédéterminé, une conclusion sur le régime de fonctionnement de la charge étant tirée de la fréquence des limitations du courant.

6. Agencement de circuit selon la revendication 5, **caractérisé en ce que** le signal de sortie du dispositif (7) à valeur de seuil est amené à un élément intégrateur pour être évalué.

7. Agencement de circuit selon la revendication 5, **caractérisé en ce que** le signal de sortie est amené au dispositif de commande (5) qui crée le signal de commande à impulsions modulées en largeur pour qu'il y soit évalué.

8. Agencement de circuit selon l'une des revendications 6 à 7, **caractérisé en ce que** le dispositif de commutation (8) est une bascule bistable ("Flip-Flop") dont l'entrée pilote (S) conduit au dispositif (7) à valeur de seuil et dont l'entrée de réinitialisation (R) reçoit le signal de commande par impulsion modulée en largeur créée par le dispositif de commande (5).

9. Agencement de circuit selon l'une des revendications 6 à 8 qui précèdent, **caractérisé en ce que** la charge (1) à raccorder fait partie d'un circuit de pont dont chaque moitié de pont peut être commandée par le signal variable à impulsions modulées en largeur.
